# DEMANDE DE BREVET EUROPEEN

(11) **EP 4 800 612 A1**
(43) Date de publication de la demande: **02.09.2026**
(21) Numéro de dépôt: 26160158.7
(22) Date de dépôt: 23.02.2026
(51) Int. Cl.: G06Q 10/00, G06Q 50/06, F24D 19/10, F24H 15/152, F24H 15/262

(54) **PROCEDE DE PILOTAGE D'UNE CONSOMMATION D'ENERGIE**

(30) Priorité: 27.02.2025 FR 2501983
(71) Demandeur: DELTA DORE, 35270 Bonnemain (FR)
(72) Inventeur: BERNAUD, Pierre, 38054 GRENOBLE Cedex 09 (FR); BRUN, Adrien, 38054 GRENOBLE Cedex 09 (FR); LE DUC, Minh Khang, 35270 BONNEMAIN (FR)
(74) Mandataire: Cabinet Le Guen Maillet

(57) **Abrégé**

Un procédé (100) de pilotage d'une consommation d'énergie liée au chauffage et/ou au refroidissement d'une zone thermique d'un bâtiment en fonction de l'ensoleillement de la pièce, le procédé (100) étant mis en œuvre par un dispositif de pilotage comprenant de la circuiterie électronique (200) adaptée pour implémenter le procédé. Le procédé (100) de pilotage comprend au moins un premier cycle de calibration I et un deuxième cycle d'utilisation II.

## Description

### DOMAINE TECHNIQUE

L'invention concerne le domaine du pilotage des dispositifs de chauffage/refroidissement des zones thermiques d'un bâtiment.

### ETAT DE LA TECHNIQUE ANTERIEURE

Dans un contexte d'autoproduction électrique, par exemple d'autoproduction d'énergie photovoltaïque, il est connu d'utiliser un Gestionnaire d'Optimisation des Consommations Electriques (abrégé GOCE). Le GOCE est en charge d'optimiser la consommation énergétique : répartir l'énergie photovoltaïque autoproduite ou prendre des décisions liées à la tarification de l'énergie en lien avec la flexibilité des usages.

Pour optimiser le pilotage énergétique, il est nécessaire d'identifier la consommation énergétique journalière (sur un horizon de 24h) du système de chauffage/refroidissement du bâtiment permettant d'assurer le confort thermique de ses occupants.

D'une manière connue, cette consommation énergétique quotidienne dépend : des performances de l'enveloppe du bâtiment et des conditions extérieures (température d'air et rayonnement solaire incident).

Il est connu de déterminer un besoin énergétique quotidien en utilisant de nombreux relevés internes et externes du bâtiment pour mesurer notamment les apports solaires dans une zone thermique du bâtiment. Cette méthode peut fournir des résultats précis mais nécessite un très grand nombre de capteurs ce qui la rend complexe à mettre en œuvre et particulièrement onéreuse.

Dans ce contexte, il est nécessaire de fournir un procédé de pilotage d'une consommation énergétique d'un bâtiment, qui permette de prédire précisément un besoin énergétique d'une zone thermique d'un bâtiment, tout en étant simple à mettre en œuvre et peu onéreux.

### EXPOSE DE L'INVENTION

Selon un premier aspect, il est proposé un procédé de pilotage d'une consommation d'énergie liée au chauffage et/ou au refroidissement d'une zone thermique d'un bâtiment en fonction de l'ensoleillement de la pièce. Le procédé est mis en œuvre par un dispositif de pilotage comprenant de la circuiterie électronique adaptée pour implémenter le procédé. Le procédé de pilotage comprend au moins un premier cycle de calibration I et un deuxième cycle d'utilisation II, les cycles comprenant au moins les étapes suivantes :
- Cycle de calibration I:
   ∘ (Etape 1) Acquérir un historique de données météorologique du bâtiment, les données météorologiques comprenant au moins une pluralité de valeurs horodatées de nébulosité et une pluralité de valeurs de température extérieure correspondantes ;
   ∘ (Etape 2) Calculer une énergie solaire incidente d'au moins une façade extérieure de la zone thermique du bâtiment en fonction des données météorologiques acquises à l'étape 1.
   ∘ (Etape 3) Calculer un degré jour unifié de la zone thermique en fonction des valeurs de température extérieure acquises à l'étape 1.
   ∘ (Etape 4) Acquérir des valeurs horodatées d'une consommation énergétique de chauffage/refroidissement de la pièce.
   ∘ (Etape 5) Calibrer plusieurs modèles de prédiction d'une consommation énergétique de chauffage/refroidissement en fonction de l'énergie solaire incidente d'au moins une façade calculée à l'étape 2, du degré jour unifié calculé à l'étape 3 et des valeurs horodatées de consommation énergétique acquises à l'étape 4.
   ∘ (Etape 6) Choisir le modèle présentant une erreur moyenne journalière la plus faible parmi les modèles calibrés.
- Cycle d'utilisation II:
   ∘ (Etape 7) Calculer une prévision de consommation journalière en utilisant le modèle choisi à l'étape 6 et en utilisant des données de prévisions météorologiques.
   ∘ (Etape 8) Piloter le dispositif de chauffage et/ou refroidissement, en fonction de la prévision de l'étape 7.

Ainsi, le procédé de pilotage permet très avantageusement de prédire précisément un besoin énergétique d'une zone thermique d'un bâtiment, tout en étant simple à mettre en œuvre et peu onéreux.

Selon une disposition particulière, le cycle d'utilisation II est exécuté selon un pas de temps inférieur à un pas de temps d'exécution du cycle de calibration I.

Selon une disposition particulière, les modèles de l'étape 5 sont des modèles de régression linéaire multiple dans lesquels une variable à expliquer est l'énergie de chauffage/refroidissement journalière consommée et présentant une ou plusieurs variables explicatives.

Selon une disposition particulière, l'un des modèles de l'étape 5 est un modèle de signature énergétique dans lequel le degré jour unifié est une variable explicative.

Selon une disposition particulière, l'un des modèles de l'étape 5 est un modèle de signature énergétique dans lequel une énergie d'un rayonnement solaire horizontal est une variable explicative.

Selon une disposition particulière, l'un des modèles de l'étape 5 est un modèle de signature énergétique dans lequel l'énergie solaire incidente d'au moins une façade est une variable explicative.

Selon un autre aspect, il est aussi proposé un dispositif qui comprend de la circuiterie électronique pour implémenter un procédé comprenant au moins un premier cycle de calibration I et un deuxième cycle d'utilisation II, les cycles comprenant au moins les étapes suivantes :
- Cycle de calibration I:
   ∘ (Etape 1) Acquérir un historique de données météorologique du bâtiment, les données météorologiques comprenant au moins une pluralité de valeurs horodatées de nébulosité et une pluralité de valeurs de température extérieure correspondantes ;
   ∘ (Etape 2) Calculer une énergie solaire incidente d'au moins une façade extérieure de la zone thermique du bâtiment en fonction des données météorologiques acquises à l'étape 1.
   ∘ (Etape 3) Calculer un degré jour unifié de la zone thermique en fonction des valeurs de température extérieure acquises à l'étape 1.
   ∘ (Etape 4) Acquérir des valeurs horodatées d'une consommation énergétique de chauffage/refroidissement de la pièce.
   ∘ (Etape 5) Calibrer plusieurs modèles de prédiction d'une consommation énergétique de chauffage/refroidissement en fonction de l'énergie solaire incidente d'au moins une façade calculée à l'étape 2, du degré jour unifié calculé à l'étape 3 et des valeurs horodatées de consommation énergétiques acquises à l'étape 4.
   ∘ (Etape 6) Choisir le modèle présentant une erreur moyenne journalière la plus faible parmi les modèles calibrés.
- Cycle d'utilisation II:
   ∘ (Etape 7) Calculer une prévision de consommation énergétique de chauffage/refroidissement journalière en utilisant le modèle choisi à l'étape 6 et en utilisant des données de prévision météorologiques.

   ∘ (Etape 8) Piloter le dispositif de chauffage et/ou refroidissement, en fonction de la prévision de l'étape 7.

Selon un autre aspect, il est aussi proposé un produit programme d'ordinateur comprenant des instructions de code de programme pour exécuter le procédé.

Selon un autre aspect, il est aussi proposé un support de stockage non transitoire sur lequel est stocké un programme d'ordinateur comprenant des instructions de code de programme pour exécuter le procédé, lorsque lesdites instructions sont lues depuis ledit support de stockage non transitoire et exécutées par un processeur.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement le déroulement d'un procédé de pilotage ;
[Fig. 2] illustre des boites à moustache de résolutions des modèles ;
[Fig. 3] illustre schématiquement un système informatique adapté pour implémenter le procédé.

### EXPOSE DETAILLE DE MODES DE REALISATION

### Procédé

Selon un premier aspect, l'invention concerne un procédé 100 de pilotage d'une consommation d'énergie liée au chauffage et/ou au refroidissement d'une zone thermique d'un bâtiment en fonction de l'ensoleillement de la zone thermique (typiquement une zone thermique peut être une pièce ou une partie d'une pièce d'un bâtiment). Il est précisé que le procédé 100 est mis en œuvre par un dispositif de pilotage comprenant de la circuiterie électronique 200 qui sera décrit ci-après.

Le procédé 100 de pilotage comprend un premier cycle de calibration et un deuxième cycle d'utilisation.

Les cycles comprennent au moins les étapes suivantes :
- Cycle de calibration I:
   ∘ (Etape 1) Acquérir un historique de données météorologique du bâtiment, les données météorologiques comprenant au moins une pluralité de valeurs horodatées de nébulosité et une pluralité de valeurs de température extérieure correspondantes ;

   ∘ (Etape 2) Calculer une énergie solaire incidente d'au moins une façade extérieure de la zone thermique du bâtiment en fonction des données météorologiques acquises à l'étape 1.
   ∘ (Etape 3) Calculer un degré jour unifié de la zone thermique en fonction des valeurs de température extérieure acquises à l'étape 1.
   ∘ (Etape 4) Acquérir des valeurs horodatées d'une consommation énergétique de chauffage/refroidissement de la zone thermique.
   ∘ (Etape 5) Calibrer plusieurs modèles de prédiction d'une consommation énergétique en fonction de l'énergie solaire incidente d'au moins une façade calculée à l'étape 2, du degré jour unifié calculé à l'étape 3 et des valeurs horodatées de consommation énergétique acquises à l'étape 4.
   ∘ (Etape 6) Choisir le modèle présentant une erreur moyenne journalière la plus faible parmi les modèles calibrés.
- Cycle d'utilisation II :
   ∘ (Etape 7) Calculer une prévision de consommation journalière en utilisant le modèle choisi à l'étape 6 et en utilisant des données de prévisions météorologiques.
   ∘ (Etape 8) Piloter le dispositif de chauffage et/ou refroidissement, en fonction de la prévision de l'étape 7.

Ainsi, tel que cela apparaitra ci-après à la lueur de la description détaillée des différentes étapes, le procédé 100 permet de déterminer simplement une consommation énergétique d'une zone thermique, sans nécessiter l'utilisation de nombreux capteurs onéreux, et permet ainsi de piloter un dispositif de chauffage/refroidissement en fonction d'une prévision précise de la consommation journalière de la zone thermique.

### Cycle de calibration I

### Etape 1

Comme indiqué précédemment, l'étape 1 comprend d'acquérir un historique de données météorologiques du bâtiment. Typiquement, l'historique des données météorologiques est acquis par l'intermédiaire d'une interface réseau (gestionnaire d'interfaces d'entrées-sorties 205) du dispositif 200 qui sera décrit ci-après.

Typiquement, les données météorologiques comprennent une pluralité de valeurs horodatées de nébulosité (couverture nuageuse) et une pluralité de valeurs de température extérieure correspondantes.

En d'autres termes, les données météorologiques acquises comprennent au moins des couples de données de nébulosité et de température extérieures pour des dates données (i.e. chaque couple de donnée est associé à une date).

Il existe plusieurs services météo disponibles qui fournissent les prévisions et les mesures courantes des conditions météorologiques ainsi que la nébulosité (ou couverture nuageuse) pour une localisation. Par exemple, le service de prévisions météorologiques est Openweather ou Meteoblue ou Green Forecast ou Steadysun.

### Etape 2

Comme indiqué précédemment, l'étape 2 comprend de calculer une énergie solaire incidente d'au moins une façade extérieure de la zone thermique du bâtiment en fonction des données météorologiques acquises à l'étape 1.

Pour déterminer l'énergie solaire incidente sur une façade, l'étape 2 peut comprendre d'effectuer une interpolation des données météorologiques pour obtenir, par exemple, des valeurs de température et de nébulosité à un pas de temps horaire (par exemple pour chaque heure), par exemple en effectuant des approximations/interpolations linéaires entre deux valeurs.

L'étape 2 comprend de calculer une valeur de la puissance du rayonnement solaire par ciel clair, c'est-à-dire une valeur de la puissance du rayonnement solaire théorique sans nébulosité.

La valeur de la puissance du rayonnement solaire par ciel clair est, par exemple, obtenue en exécutant l'algorithme tel que décrit dans la publication de Christelle Rigollier, Olivier Bauer, Lucien Wald, On the clear sky model of the ESRA - European Solar Radiation Atlas - with respect to the heliosat method, Solar Energy, Volume 68, Issue 1, 2000, Pages 33-48, ISSN 0038-092X.

Ce modèle fournit les vecteurs d'irradiance horizontale en fonction du temps et de la localisation de la zone thermique. Il utilise également le facteur de turbidité de liaison pour la masse d'air divulguée dans la publication susmentionnée.

A partir d'un vecteur temps universel, d'une longitude du bâtiment (en radians et positive à l'Est), d'une latitude du bâtiment (en radians et positive au Nord), d'une altitude du bâtiment, (en mètres par rapport à la mer), l'irradiance horizontale directe est calculée, en W/m², Bh_{Ciel_Clair}, l'irradiance horizontale diffuse, en W/m², Dh_{Ciel_Clair}, et l'irradiance horizontale globale, en W/m², Gh_{Ciel_Clair}.

Ensuite, les différentes valeurs de nébulosité interpolées sont prises en compte. Ainsi, pour chaque heure, une valeur de la puissance du rayonnement solaire horizontal Gh est évaluée à partir de la nébulosité C selon les formules suivantes :
- $Si C = 100 % , Gh = {Dh}_{Ciel_Clair} ;$
- $Si C = 0 % , Gh = {Dh}_{Ciel_Clair} + {Bh}_{Ciel_Clair}$
- $Si C = X % , Gh = {Dh}_{Ciel_Clair} + \left(100-X\right) / 100 {xBh}_{Ciel_Clair}$

Dans un second temps, pour chaque heure, l'évaluation de la puissance du rayonnement solaire horizontal Gh est utilisée afin d'affiner l'estimation de la composante diffuse. En effet, pour la transposition de la puissance du rayonnement solaire sur des surfaces autres qu'horizontales, il est particulièrement intéressant de connaître la valeur de la puissance du rayonnement solaire global horizontal et la part de la puissance du rayonnement solaire direct et diffus.

Pour cela, un modèle appelé Erbs tel que décrit dans la publication de F.J. Batlles, M.A. Rubio, J. Tovar, F.J. Olmo, L. Alados-Arboledas, Empirical modeling of hourly direct irradiance by means of hourly global irradiance, Energy, Volume 25, Issue 7, 2000, Pages 675-688, ISSN 0360-5442, est utilisé. Ce modèle estime la valeur de la puissance du rayonnement solaire horizontal diffus à partir d'un indice de clarté du ciel noté Kt tel que décrit dans la publication de Duffie, J.A. and Beckman, W.A. (2013) Solar Engineering of Thermal Process. 4th Edition, John Wiley & Sons, Inc., Hoboken.

Ainsi, une valeur de l'énergie apportée par le rayonnement solaire horizontal diffus pour chaque heure est obtenue.

Ensuite, la valeur de la puissance du rayonnement solaire est projetée sur une façade du bâtiment 10.

En d'autres termes, une irradiance directe, diffuse et globale incidente sur un plan est déterminée en fonction du temps (UT) et pour le lieu du bâtiment défini par sa longitude, sa latitude et son altitude en utilisant un modèle tel que décrit dans la publication de Richard Perez, Robert Seals, Pierre Ineichen, Ronald Stewart, David Menicucci, A new simplified version of the perez diffuse irradiance model for tilted surfaces, Solar Energy, Volume 39, Issue 3, 1987, Pages 221-231, ISSN 0038-092X,

Ainsi, une irradiance directe sur la façade, une irradiance diffuse sur la façade et une irradiance globale sur le plan sur la façade sont déterminées.

Une prévision de l'énergie solaire incidente sur la façade est ainsi obtenue, pour chaque heure.

### Etape 3

L'étape 3 comprend de calculer un degré jour unifié de la zone thermique en fonction des valeurs de température extérieure acquises à l'étape 1.

Pour mémoire, le degré jour unifié (DJU) est la différence entre la température extérieure et une température de référence qui permet de réaliser des estimations de consommations d'énergie thermique pour maintenir un bâtiment confortable en proportion de la rigueur de l'hiver ou de la chaleur de l'été. D'une manière connue, la température de référence habituelle de 18 °C est définie en considérant que la température intérieure d'un bâtiment est à 19 °C et que les apports gratuits internes (occupants, éclairage, équipements, etc.) et externes (rayonnement solaire...) couvrent l'équivalent de 1 °C de déperditions thermiques. Ils se divisent donc en degré-jour de chauffe (DJC) et degré-jour froid (DJF).

Selon le mode de réalisation ici présenté, le DJU est déterminé en faisant la différence entre la température de référence (18°C) et la moyenne d'une température minimale et d'une température maximale d'un jour considéré.

### Etape 4

Comme indiqué précédemment, l'étape 4 comprend d'acquérir des valeurs horodatées d'une consommation énergétique de chauffage/refroidissement de la zone thermique.

Typiquement, ces valeurs peuvent être connues du dispositif 200 qui pilote le chauffage/refroidissement de la zone thermique.

### Etape 5

L'étape 5 comprend de calibrer plusieurs modèles de prédiction d'une consommation énergétique notamment en fonction du degré jour unifié calculé à l'étape 3 et des valeurs horodatées de consommations énergétiques acquises à l'étape 4.

D'une manière particulièrement avantageuse, les modèles de l'étape 5 sont des modèles de régression linéaire multiple dans lesquels une variable à expliquer est l'énergie de chauffage journalière consommée et présentant une ou plusieurs variables explicatives.

Il est rappelé qu'en statistique, un modèle de régression linéaire est un modèle de régression qui cherche à établir une relation linéaire entre une variable dite expliquée et une ou plusieurs variables, dites explicatives.

Selon une disposition particulière, l'un des modèles de l'étape 5 peut être un modèle de signature énergétique dans lequel le degré jour unifié est une variable explicative.

Selon une disposition particulière, l'un des modèles de l'étape 5 est un modèle de signature énergétique dans lequel une énergie solaire incidente horizontale est une variable explicative.

Selon une disposition particulière, l'un des modèles de l'étape 5 est un modèle de signature énergétique dans lequel l'énergie solaire incidente de l'au moins une façade est une variable explicative.

Selon une disposition particulière, l'étape 5 peut comprendre de déterminer un rayonnement solaire transmis dans la zone thermique.

Selon une disposition particulière, l'un des modèles de l'étape 5 est un modèle de signature énergétique dans lequel la valeur du rayonnement solaire transmis est une variable explicative.

Selon une disposition particulière, l'un des modèles de l'étape 5 utilise le DJU et le rayonnement solaire acquis comme variable explicative.

Ce modèle (modèle B) s'écrit comme suit : ${X}_{B} \left(j\right) = \left[1; {DJU}_{18}\left(j\right);{E}_{h}\left(j\right)\right]$

Avec : ${DJU}_{18} \left(j\right) = max \left(0;18-\left(max\left({T}_{Ext , j}\right)+min\left({T}_{Ext , j}\right)\right)/2:Degré jours unifié\right.$

*Eₕ*(*j*) : Energie solaire journalière en kWh/m² incident sur un plan horizontal.

Selon une disposition préférentielle, l'un des modèles de l'étape 5 utilise le DJU et l'énergie solaire incidente horizontale et l'énergie solaire incidente sur chacune des façades.

Ce modèle (modèle D) s'écrit comme suit : ${X}_{D} \left(j\right) = \left[\begin{matrix}1 \\ {DJU}_{18} \left(j\right) \\ {E}_{h} \left(j\right) \\ {E}_{Sud} \left(j\right) \\ {E}_{Est} \left(j\right) \\ {E}_{Ouest} \left(j\right) \\ {E}_{Nord} \left(j\right)\end{matrix}\right]$

Avec :
*Eₕ*(*j*)*: Energie solaire journalière en kWh*/*m² incident sur un plan horizontal*
*E_{sud}*(*j*)*: Energie solaire journalière en kWh*/*m² incidente sur une façade Sud*
*E_{Est}*(*j*)*: Energie solaire journalière en kWh*/*m² incidente sur une façade Est*
*E_{Ouest}*(*j*)*: Energie solaire journalière en kWh*/*m² incidente sur une façade Ouest*
*E_{Nord}*(*j*)*: Energie solaire journalière en kWh*/*m² incidente sur une façade Nord* ${DJU}_{18} \left(j\right) = max \left(0;18-\left(max\left({T}_{Ext , j}\right)+min\left({T}_{Ext , j}\right)\right)/2:Degré jours unifié\right.$

Selon une disposition préférentielle, l'un des modèles de l'étape 5 utilise le DJU et l'énergie solaire incidente sur chacune des façades.

Ce modèle (modèle E) s'écrit comme suit : ${X}_{E} \left(j\right) = \left[1;{DJU}_{18}\left(j\right);{E}_{Est}\left(j\right);{E}_{Sud}\left(j\right);{E}_{Ouest}\left(j\right)\right]$

Avec :
*E_{Sud}*(*j*) *: Energie solaire journalière en kWh*/*m² incident sur une façade Sud*
*E_{Est}*(*j*) *: Energie solaire journalière en kWh*/*m² incident sur une façade Est*
*E_{Ouest}*(*j*) *: Energie solaire journalière en kWh*/*m² sur une façade Ouest*
*E_{Nord}*(*j*) *: Energie solaire journalière en kWh*/*m² incident sur une façade Nord* ${DJU}_{18} \left(j\right) = max \left(0;18-\left(max\left({T}_{Ext , j}\right)+min\left({T}_{Ext , j}\right)\right)/2:Degré jours unifié\right.$

Ainsi, en d'autres termes, les modèles sont identifiés en utilisant les données historiques suivantes :
- Température extérieure mesurée *Tₑₓₜ*
- Prévision du rayonnement solaire horizontal *Gh*
- Prévision de la couverture nuageuse (nébulosité)
- L'énergie de chauffage journalière consommée *E_{ch}*

A partir de ces données les variables explicatives de chaque modèle sont calculées pour chaque journée incluse dans l'historique étudié.

A partir de ces données est établi un modèle de régression linéaire multiple **b** dans lequel la variable **y** à expliquer est l'énergie de chauffage journalière consommée.

y est défini de la façon suivante, avec j l'indice correspondant au j^{eme} jour considéré : $y \left(j\right) = {E}_{ch} \left(j\right)$ *y =* [*y*₁ *y*₂, *... , yₙ*] avec n représentant le nombre de journées (avec chauffage) utilisé pour la calibration du modèle.

La résolution de chaque modèle est effectuée de la manière suivante : En notant Xa, la matrice de données d'apprentissage telle que : *Xₐ* = *X*(*t*)*, t ∈ a,* a représentant l'ensemble des journées d'apprentissage.

Les coefficients de la régression sont obtenus de façon directe par le produit matriciel suivant : $b = {\left({X}_{a}^{′}{X}_{a}\right)}^{- 1} X {′}_{a} y$

La réponse du modèle est obtenue par le produit matriciel y(j) = *E_{ch}*(*j*) *= X*(*j*)*. b*

Selon une disposition particulière, le domaine de validité du modèle est limité aux périodes de fonctionnement du système de chauffage. Aussi, selon ce mode de réalisation, les données pour la création du modèle proviennent uniquement de ces périodes de fonctionnement du système de chauffage. Les périodes de fonctionnement du système de chauffage sont identifiées comme suit : le système de chauffage doit être en fonctionnement et la consommation journalière du système de chauffage doit être non nulle.

### Etape 6

Comme indiqué précédemment, l'étape 6 comprend de choisir le modèle présentant une erreur moyenne journalière la plus faible parmi les modèles calibrés.

La performance de chaque modèle peut être évaluée de la façon suivante : Soit la fréquence de mise à jour du modèle *f_{MAj}* = 15 *jours.*

On calcule l'erreur moyenne d'estimation de chacun des i modèles (aussi appelée performance) : ${Err}_{mod è le i} = \frac{1}{{f}_{MAJ}} {\sum }_{j = 1}^{{f}_{MAJ}} \left|{C}_{mes}\left(j\right)-{C}_{modele i}\left(j\right)\right|$

Avec:
*f_{MAJ}* : Fréquence de mise à jour du modèle
*j* : Indice du jour (par exemple prenant les valeurs de 1 à *f_{MAJ}*)
*Cₘₑₛ* : La consommation journalière de chauffage mesurée en kWh
*C_{modèle i}* : La consommation journalière de chauffage estimée en kWh par le ième modèle.

Le modèle retenu est celui qui présente l'erreur la plus faible (c'est-à-dire la meilleure performance).

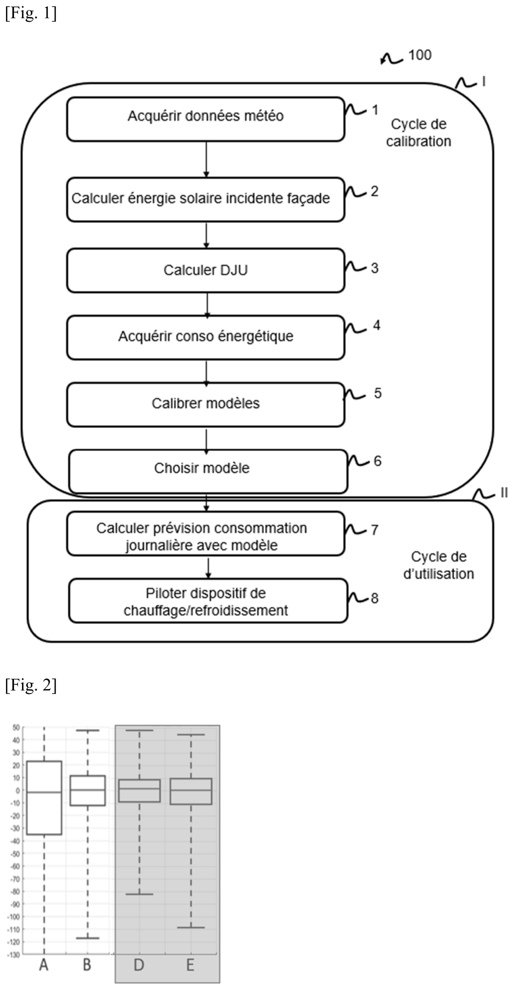

La Fig. 2 présente sous forme de boites à moustaches les résultats des modèles B, D et E, ainsi que d'un modèle A qui correspond à un modèle de l'art antérieur utilisant uniquement le DJU.

Ainsi, en référence à la Fig. 2, les modèles D et E apparaissent comme étant particulièrement précis, tout en permettant de s'affranchir d'une fastidieuse obtention du rayonnement solaire transmis.

### Cycle d'utilisation

### Etape 7

Comme indiqué précédemment, l'étape 7 comprend de calculer une prévision de consommation journalière en utilisant le modèle choisi à l'étape 6 et en utilisant des données de prévisions météorologiques.

D'une manière préférentielle, le procédé choisira le modèle D ou le modèle E.

### Etape 8

L'étape 8 comprend de piloter le dispositif de chauffage et/ou refroidissement, en fonction de la prévision de l'étape 7.

D'une manière particulièrement avantageuse, l'étape 8 peut comprendre de piloter un dispositif de gestion optimale de la charge électrique (abrégé GOCE), pour permettre par exemple d'optimiser une autoconsommation en planifiant des moments d'activation de certains équipements en fonction de leur besoin énergétique journalier.

En outre, selon une autre disposition avantageuse, l'étape 8 peut comprendre de piloter un système de gestion énergétique communautaire (microgrid en anglais), en permettant un partage optimal des ressources énergétiques en fournissant des données agrégées de prévisions de consommation en chauffage et en refroidissement de chaque logement du microgrid.

### Périodicité des cycles

Selon une disposition particulièrement avantageuse, les deux cycles (le cycle de calibration I et le cycle d'utilisation II) sont exécutés selon des périodicités différentes.

Ainsi, le cycle d'utilisation peut être répété selon un pas de temps plus petit qu'un pas de temps de répétition du cycle de calibration.

En d'autres termes, le cycle d'utilisation II peut être répété plus souvent que le cycle de calibration I.

A titre d'exemple, le cycle de calibration I peut être exécuté toutes les deux semaines ou tous les mois.

A titre d'exemple, aussi, le cycle d'utilisation II peut être exécuté plusieurs fois par jour, par exemple une fois par heure.

Selon une disposition particulièrement avantageuse, une fois que le cycle de calibration I a été effectué et donc qu'un modèle a été choisi, l'erreur obtenue sur une journée par ce modèle peut être déterminée chaque jour. Si cette erreur dépasse un seuil prédéterminé alors le procédé recommence une étape de calibration I.

### Produit programme d'ordinateur

Selon un autre aspect, il est proposé un produit programme d'ordinateur comprenant des instructions de code de programme pour exécuter le procédé 100 de pilotage.

### Support de stockage

Selon un autre aspect, il est proposé un support de stockage non transitoire sur lequel est stocké un programme d'ordinateur comprenant des instructions de code de programme pour exécuter le procédé 100 de pilotage, lorsque lesdites instructions sont lues depuis ledit support de stockage non transitoire et exécutées par un processeur.

### Dispositif de pilotage

Selon un autre aspect, il est proposé un dispositif de pilotage comprenant de la circuiterie électronique (système informatique 200) adaptée pour implémenter un procédé 100.

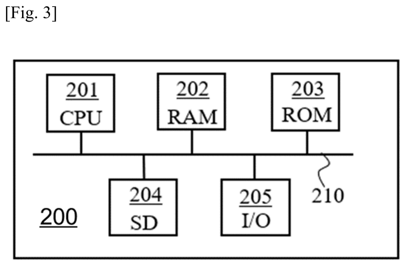

Tel que schématisé sur la Fig. 3, le système informatique 200 peut comporter, reliés par un bus de communication 210 : un processeur 201 ; une mémoire vive 202 ; une mémoire morte 203, par exemple de type ROM (« Read Only Memory » en anglais) ou EEPROM (« Electrically-Erasable Programmable Read Only Memory » en anglais) ; une unité de stockage 204, telle qu'un disque dur HDD (« Hard Disk Drive » en anglais), ou un lecteur de support de stockage, tel qu'un lecteur de cartes SD (« Secure Digital » en anglais) ; et un gestionnaire d'interfaces d'entrées-sorties 205.

Le processeur 201 est capable d'exécuter des instructions chargées dans la mémoire vive 202 à partir de la mémoire morte 203, d'une mémoire externe, d'un support de stockage (tel qu'une carte SD), ou d'un réseau de communication. Lorsque le système informatique 200 est mis sous tension, le processeur 201 est capable de lire de la mémoire vive 202 des instructions et de les exécuter. Ces instructions forment un programme d'ordinateur permettant l'implémentation, par le processeur 201, du procédé 100.

Tout ou partie du procédé 100 peut ainsi être implémenté sous forme logicielle par exécution d'un ensemble d'instructions par une machine programmable, par exemple un processeur de type DSP (« Digital Signal Processor » en anglais) ou un microcontrôleur, ou être implémenté sous forme matérielle par une machine ou un composant dédié, par exemple un composant FPGA (« Field Programmable Gate Array » en anglais) ou ASIC (« Application-Specific Integrated Circuit » en anglais). D'une manière générale, le système informatique 200 comporte de la circuiterie électronique adaptée et configurée pour implémenter, sous forme logicielle et/ou matérielle, le procédé 100 en relation avec le système informatique 200 en question.

D'une manière particulièrement avantageuse, l'exécution du procédé 100 nécessite peu de ressources en termes de puissance de calcul ou de quantité de mémoire. Ainsi, le procédé 100 peut être exécuté par un dispositif 200 présentant des capacités dites limitées et peu consommatrices d'énergie et ne nécessitant pas nécessairement l'utilisation de serveurs distants.

## Revendications

1. Procédé (100) de pilotage d'une consommation d'énergie liée au chauffage et/ou au refroidissement d'une zone thermique d'un bâtiment en fonction de l'ensoleillement de la pièce, le procédé (100) étant mis en œuvre par un dispositif de pilotage comprenant de la circuiterie électronique (200) adaptée pour implémenter le procédé, le procédé (100) de pilotage étant **caractérisé en ce qu'**il comprend au moins un premier cycle de calibration I et un deuxième cycle d'utilisation II, les cycles comprenant au moins les étapes suivantes :
- Cycle de calibration I:
∘ (Etape 1) Acquérir un historique de données météorologiques du bâtiment, les données météorologiques comprenant au moins une pluralité de valeurs horodatées de nébulosité et une pluralité de valeurs de température extérieure correspondantes ;
∘ (Etape 2) Calculer une énergie solaire incidente d'au moins une façade extérieure de la zone thermique du bâtiment en fonction des données météorologiques acquises à l'étape 1.
∘ (Etape 3) Calculer un degré jour unifié de la zone thermique en fonction des valeurs de température extérieure acquises à l'étape 1.
∘ (Etape 4) Acquérir des valeurs horodatées d'une consommation énergétique de chauffage/refroidissement de la pièce.
∘ (Etape 5) Calibrer plusieurs modèles de prédiction d'une consommation énergétique de chauffage/refroidissement en fonction de l'énergie solaire incidente d'au moins une façade calculée à l'étape 2, du degré jour unifié calculé à l'étape 3 et des valeurs horodatées de consommation énergétique acquises à l'étape 4.
∘ (Etape 6) Choisir le modèle présentant une erreur moyenne journalière la plus faible parmi les modèles calibrés.
- Cycle d'utilisation II:
∘ (Etape 7) Calculer une prévision de consommation journalière en utilisant le modèle choisi à l'étape 6 et en utilisant des données de prévisions météorologiques.
∘ (Etape 8) Piloter le dispositif de chauffage et/ou refroidissement, en fonction de la prévision de l'étape 7.

2. Procédé (100) selon la revendication 1, dans lequel le cycle d'utilisation II est exécuté selon un pas de temps inférieur à un pas de temps d'exécution du cycle de calibration I.

3. Procédé (100) selon l'une quelconque des revendications précédentes, dans lequel les modèles de l'étape 5 sont des modèles de régression linéaire multiple dans lesquels une variable à expliquer est l'énergie de chauffage/refroidissement journalière consommée et présentant une ou plusieurs variables explicatives.

4. Procédé (100) selon la revendication 3, dans lequel l'un des modèles de l'étape 5 est un modèle de signature énergétique dans lequel le degré jour unifié est une variable explicative.

5. Procédé (100) selon la revendication 3, dans lequel l'un des modèles de l'étape 5 est un modèle de signature énergétique dans lequel une énergie d'un rayonnement solaire horizontal est une variable explicative.

6. Procédé (100) selon la revendication 3, dans lequel l'un des modèles de l'étape 5 est un modèle de signature énergétique dans lequel l'énergie solaire incidente d'au moins une façade est une variable explicative.

7. Dispositif **caractérisé en ce qu'**il comprend de la circuiterie électronique (200) pour implémenter un procédé comprenant au moins un premier cycle de calibration I et un deuxième cycle d'utilisation II, les cycles comprenant au moins les étapes suivantes :
- Cycle de calibration I:
∘ (Etape 1) Acquérir un historique de données météorologiques du bâtiment, les données météorologiques comprenant au moins une pluralité de valeurs horodatées de nébulosité et une pluralité de valeurs de température extérieure correspondantes ;
∘ (Etape 2) Calculer une énergie solaire incidente d'au moins une façade extérieure de la zone thermique du bâtiment en fonction des données météorologiques acquises à l'étape 1.
∘ (Etape 3) Calculer un degré jour unifié de la zone thermique en fonction des valeurs de température extérieure acquises à l'étape 1.
∘ (Etape 4) Acquérir des valeurs horodatées d'une consommation énergétique de chauffage/refroidissement de la pièce.
∘ (Etape 5) Calibrer plusieurs modèles de prédiction d'une consommation énergétique de chauffage/refroidissement en fonction de l'énergie solaire incidente d'au moins une façade calculée à l'étape 2, du degré jour unifié calculé à l'étape 3 et des valeurs horodatées de consommations énergétiques acquises à l'étape 4.
∘ (Etape 6) Choisir le modèle présentant une erreur moyenne journalière la plus faible parmi les modèles calibrés.
- Cycle d'utilisation II:
∘ (Etape 7) Calculer une prévision de consommation énergétique de chauffage/refroidissement journalière en utilisant le modèle choisi à l'étape 6 et en utilisant des données de prévisions météorologiques.
∘ (Etape 8) Piloter le dispositif de chauffage et/ou refroidissement, en fonction de la prévision de l'étape 7.

8. Produit programme d'ordinateur comprenant des instructions de code de programme pour exécuter le procédé (100) selon l'une quelconque des revendications 1 à 6, lorsque lesdites instructions sont exécutées par un processeur.

9. Support de stockage non transitoire sur lequel est stocké un programme d'ordinateur comprenant des instructions de code de programme pour exécuter le procédé (100) selon l'une quelconque des revendications 1 à 6, lorsque lesdites instructions sont lues depuis ledit support de stockage non transitoire et exécutées par un processeur.
